# EUROPÄISCHE PATENTSCHRIFT

(11) **EP 4 095 039 B1**
(45) Veröffentlichungstag und Bekanntmachung des Hinweises auf die Patenterteilung: **04.09.2024**
(21) Anmeldenummer: 21176495.6
(22) Anmeldetag: 28.05.2021
(51) Int. Cl.: B64D 11/04, F24C 15/16

(54) **OFENGESTELL ZUM HALTEN VON SPEISENBEHÄLTERN**
OVEN FRAME FOR HOLDING FOOD CONTAINERS
GRILLE DE FOUR PERMETTANT DE TENIR LES RÉCIPIENTS ALIMENTAIRES

(43) Veröffentlichungstag der Anmeldung: 30.11.2022
(73) Patentinhaber: Airbus Operations GmbH, 21129 Hamburg (DE)
(72) Erfinder: DELAPLANCHE, Olivier, 21129 Hamburg (DE); MORTENSEN ERNITS, Rafael, 28209 Bremen (DE); KIEHNE, Oliver, 21129 Hamburg (DE); TIEMANN, Markus, 21129 Hamburg (DE); REISS, Matthias, 21129 Hamburg (DE); BAUER, Michael, 21129 Hamburg (DE); FREITAG, Michael, 28719 Bremen (DE); KEISER, Dennis, 28209 Bremen (DE)
(74) Vertreter: LKGLOBAL Lorenz & Kopf Patentanwalt Attorney at Law PartG mbB

(56) Entgegenhaltungen:
- EP-A1- 3 671 045
- WO-A1-03/086882
- WO-A1-2005/094646
- WO-A1-2014/169314
- US-A- 5 403 997

## Beschreibung

### TECHNISCHES GEBIET

Die Erfindung betrifft ein Ofengestell zum Halten von Speisenbehältern, ein System zum Transport und zur Handhabung von Speisen, ein Verfahren zum Transport und zur Handhabung von Speisen sowie ein Luftfahrzeug.

### HINTERGRUND DER ERFINDUNG

Auf Reisen in Verkehrsmitteln werden gelegentlich Speisen an Passagiere ausgegeben. Neben gekühlten Speisen werden gerade bei Langstreckenreisen, zum Beispiel auf Langstreckenflügen, erwärmte Speisen angeboten. Die in Speisenbehältern befindlichen Speisen werden üblicherweise in Schubladen eines Servierwagens untergebracht und in das Luftfahrzeug geführt. Zur Erwärmung der Speisen werden die Speisenbehälter den Schubladen entnommen und in ein Ofengestell gesetzt, welches dann in einen Bordküchenofen zum Erwärmen der Speisenbehälter gesetzt wird. Nach dem Erwärmen wird das Ofengestell aus dem Ofen entnommen und die Speisenbehälter werden dort herausgezogen. In der Praxis kann es durchaus geschehen, dass die Speisenbehälter direkt dem Ofengestell entnommen werden, wenn sich dies noch im Ofen befindet. Die Handhabung der erwärmten Speisenbehälter ist mühsam und durch die vorhandene Hitze des Ofens und der Behälter mit entsprechenden Schutzmaßnahmen verbunden, wenn die Speisenbehälter dem Ofen entnommen werden.

WO 2014/169314 A1 offenbart ein Modul zum Tragen von Lebensmitteln zum Erhitzen in einem Flugzeugofen, wobei das Modul einen Turm von gestapelten Tabletts und ein Gehäuse mit Endabschnitten umfasst, die so gestaltet sind, dass sie sich öffnen und die Abgabe des Turms von Tabletts in einen Ofen ermöglichen. Ferner wird ein Tablett zur Verwendung in dem Modul gezeugt, wobei das Tablett eine Plattform zum Halten eines Lebensmittels und eine Anordnung von hohlen Vorsprüngen aufweist, die von der Plattform vorstehen, um die Plattform von einer Plattform eines benachbarten gestapelten Tabletts zu beabstanden, wobei die Vorsprünge über die Plattform mit einem Versatz angeordnet sind, um zu ermöglichen, dass das Tablett um eine Achse vertikal zu der Plattform um 180° umgedreht und in einem Turm gestapelt werden kann.

### ZUSAMMENFASSUNG DER ERFINDUNG

Es ist eine Aufgabe der Erfindung, eine alternative Vorrichtung vorzuschlagen, mit der das Handhaben, Transportieren, Erwärmen und Herausgeben von Speisen in einem Verkehrsmittel, insbesondere einem Flugzeug, verbessert wird.

Die Aufgabe wird gelöst durch ein Ofengestell mit den Merkmalen des unabhängigen Anspruchs 1. Vorteilhafte Ausführungsformen und Weiterbildungen sind den Unteransprüchen und der nachfolgenden Beschreibung zu entnehmen.

Es wird ein Ofengestell zum Halten von Speisenbehältern zum Erhitzen in einem Bordküchenofen vorgeschlagen, aufweisend mehrere Aufnahmen zum Aufnehmen von Speisenbehältern, mindestens zwei Verbindungsanordnungen, wobei die Aufnahmen übereinander angeordnet sind, wobei die mindestens zwei Verbindungsanordnungen an zwei einander gegenüberliegenden Seitenflächen der Aufnahmen angeordnet und mit den Aufnahmen gekoppelt sind, wobei die Verbindungsanordnungen dazu ausgebildet sind, die Aufnahmen übereinander zu halten und wahlweise zum Einnehmen eines kompaktierten Zustandes mit einem ersten Abstand zueinander zu arretieren oder zum Einnehmen eines Entnahmezustandes zur Entnahme der Speisenbehälter mit einem zweiten Abstand zueinander zu arretieren, wobei der zweite Abstand größer ist als der erste Abstand.

Das Ofengestell ist eine Vorrichtung, die dazu vorgesehen ist, mehrere Speisenbehälter aufzunehmen und in einen Bordküchenofen gesteckt oder geschoben zu werden. Die Speisenbehälter können durch das Ofengestell in einer solchen Anordnung gehalten werden, dass die Speisenbehälter gleichmäßige Abstände aufweisen und dadurch gleichmäßig in dem Bordküchenofen erwärmbar sind. Das Ofengestell ist aus diesem Grunde rundum luftdurchlässig, sodass Heißluft des Bordküchenofens die einzelnen Speisenbehälter umspülen kann.

Die Aufnahmen dienen dazu, Speisenbehälter auf vordefinierte Weise zu lagern. In dem Ofengestell sind mehrere Aufnahmen vorgesehen, die jeweils einen oder mehrere Speisenbehälter aufnehmen können. Sind die Aufnahmen zum Aufnehmen mehrerer Speisenbehälter vorgesehen, können die Speisenbehälter hintereinander und/oder nebeneinander angeordnet sein. Durch die Verwendung mehrerer Aufnahmen in einer vertikal gestapelten Anordnung kann ein übliches Ofengestell kreiert werden.

Erfindungsgemäß sind die übereinander angeordneten Aufnahmen mit mindestens zwei Verbindungsanordnungen gekoppelt, um die Aufnahmen miteinander in einer vorgegebenen, vertikalen Stapelung zu platzieren. Die Aufnahmen können jeweils einen ebenen Gestellabschnitt darstellen, ähnlich wie mehrere, flache Stapelkästen. Zum Tragen von Speisenbehältern können die Aufnahmen Paare von beabstandeten, streifenartigen Laschen oder andere Aufnahmemittel umfassen. Die tatsächliche Ausführung der einzelnen Aufnahmen ist zunächst unerheblich, wobei es grundsätzlich bevorzugt sein kann, dass die Aufnahmen jeweils identisch ausgebildet sind.

Die mindestens zwei Verbindungsanordnungen sind an den einander gegenüberliegenden Seitenflächen der Aufnahmen angeordnet und halten die Aufnahmen in einem vorgegebenen vertikalen Abstand zueinander. Die Verbindungsanordnungen können jeweils ein oder mehrere Verbindungselemente umfassen, die sich zwischen zwei oder mehr aufeinanderfolgenden Aufnahmen erstrecken.

Die Verbindungsanordnungen erlauben, das Ofengestell wahlweise zu kompaktieren oder zu expandieren. In einem expandierten Zustand sind die Aufnahmen so weit voneinander beanstandet, dass die Speisenbehälter derart platziert werden, dass sie in dem Bordküchenofen gut von der Heißluft umspült werden können, um erwärmt zu werden. Das Ofengestell kann in diesem Zustand äußere Abmessungen aufweisen, die denen eines üblichen Ofengestells entsprechen. Der kompaktierte Zustand erlaubt indes eine dichtestmögliche Packung von Speisenbehältern, um diese möglichst platzsparend direkt mit dem Ofengestell in einem Servierwagen platzieren zu können. Das Umpacken von Speisenbehältern von Schubladen in einem Servierwagen in ein separates Ofengestell entfällt. Die Bestückung des Bordküchenofens mit Speisenbehältern erfolgt dadurch sehr schnell. Gleichzeitig kann an Bord des Flugzeugs Gewicht gespart werden, denn es Entfallen die einzelnen Schubladen zur Aufnahme der Speisenbehälter in dem betreffenden Servierwagen. Insgesamt beschleunigt sich zudem der Ablauf des Erwärmens und der Handhabung der Speisenbehälter.

Das Ofengestell könnte ferner eine in das Ofengestell integrierte Ausgabevorrichtung aufweisen, die dazu ausgebildet ist, bei der Bewegung einer Komponente der Ausgabevorrichtung einen Speisenbehälter aus dem Ofengestell nach außen abzugeben. Die Ausgabevorrichtung ist dazu vorgesehen, Speisenbehälter aus dem Ofengestell ohne eine direkte Handhabung nach außen zu befördern. Die Verbrennungsgefahr wird dadurch reduziert. Die Ausgabevorrichtung ist bevorzugt ohne aktive Elemente ausgestattet, sodass sie direkt beim Erwärmen der Speisenbehälter in dem Ofengestell verbleiben kann. Zur Realisierung der Ausgabevorrichtung können unterschiedliche Mechanismen genutzt werden. Es kann sich anbieten, einfache und robuste Mechanismen, die etwa aus Warenautomaten bekannt sind, zu verwenden. Bei einem solchen könnte zumindest eine Komponente hin- und herbewegbar sein und könnte während der Hin- und Herbewegung einen Eingriff mit einem Speisenbehälter herstellen, sodass dieser der Hin- und Herbewegung folgt und aus dem Ofengestell bewegt wird.

Die Ausgabevorrichtung könnte eine Schublade zum Herausziehen einzelner Speisenbehälter aufweisen, die zwischen einer eingeschobenen Stellung und einer herausgezogenen Stellung bewegbar ist, wobei die Ausgabevorrichtung dazu ausgebildet ist, beim Bewegen der Schublade in die herausgezogene Stellung einen Speisenbehälter auszugeben. Die Schublade könnte an einem unteren Ende des Ofengestells angeordnet und aus dem Ofengestell herausziehbar sein. Während der Herausziehbewegung der Schublade könnte ein Speisenbehälter in der Schublade liegen und beim Herausziehen der Schublade ebenso nach außen gezogen werden.

Die Schublade könnte eine bodenseitige Öffnung aufweisen, durch die Speisenbehälter ausgegeben werden können. Weiterhin könnte ein Eingriffselement zum Eingreifen in oder an einen Speisenbehälter vorgesehen sein. Ein Eingriffselement könnte beispielsweise an einem hinteren Ende der Schublade vorgesehen sein und mit einem hinteren Ende eines Speisenbehälters in Flächenkontakt geraten. Die bodenseitige Öffnung erlaubt ein Freigeben des Speisenbehälters aus der Schublade nach unten, wenn sich die Schublade innerhalb des Ofengestells befindet. Ein Benutzer könnte ein Tablett oder einen anderen Speisenbehälter unter der Schublade platzieren und durch Herausziehen der Schublade einen Speisenbehälter direkt auf dem Tablett platzieren.

Die Ausgabevorrichtung könnte dazu ausgebildet sein, die Speisenbehälter vertikal zu bewegen, sodass nacheinander übereinander befindliche Speisenbehälter durch die Ausgabevorrichtung ausgegeben werden. Die Speisenbehälter könnten durch einen mit der Ausgabevorrichtung gekoppelten Mechanismus oder durch die Schwerkraft vertikal nach unten nach rutschen, wenn ein Speisenbehälter bereits abgegeben ist. Es ist insbesondere denkbar, dass bei der Verwendung einer Schublade ein unterster Speisenbehälter eines Stapels aus Speisenbehältern durch die Schublade nach außen gezogen wird und nach dem Einschieben der geleerten Schublade der Stapel der verbleibenden Speisenbehälter nach unten nachrutscht. Beim erneuten Herausziehen der Schublade befindet sich folglich ein nächster Speisenbehälter in dieser und wird beim erneuten Herausziehen abgegeben. Dies kann so lange wiederholt werden, bis der Stapel aus Speisenbehältern vollständig abgegeben ist.

In einer Alternative weist das Ofengestell an einer Oberseite einen Haltegriff auf, an dem das Ofengestell gehalten oder hochgehoben werden kann, wobei die mindestens zwei Verbindungsanordnungen dazu ausgebildet sind, beim Ziehen des Haltegriffs den zweiten Abstand einzunehmen. Der Haltegriff könnte klappbar sein und in einem abgeklappten Zustand bündig in eine Vertiefung oder auf einer Fläche aufliegend realisiert sein. Durch das Betätigen des Handgriffs werden alle Aufnahmen mit einer Zugkraft beaufschlagt, sodass sie sich auseinander bewegen lassen. Es ist denkbar, dass das Ofengestell eine Verriegelung aufweist, die zum Wechseln des Abstandes lösbar und zum Festlegen des Abstands aktivierbar ist.

In einer anderen Alternative sind die mindestens zwei Verbindungsanordnungen dazu ausgebildet, durch Drücken auf eine Oberseite des Ofengestell den ersten Abstand einzunehmen. Die Aufnahmen könnten etwa durch Druckfedern stets in eine expandierte Stellung gedrängt werden, sodass durch Drücken auf die Oberseite des Ofengestells eine Kompaktierung erreicht werden könnte. Dies ist unabhängig von der Tatsache, ob und welche Art von Verriegelung verwendet wird.

Die mindestens zwei Verbindungsanordnungen könnten mindestens einen Rastmechanismus und/oder mindestens ein Verriegelungselement zum selektiven Arretieren der Aufnahmen in dem ersten oder zweiten Abstand aufweisen. Die mindestens zwei Verbindungsanordnungen könnten daher bei einem Wechsel von dem zweiten Abstand zu dem ersten Abstand oder umgekehrt einrasten, sodass der betreffende Abstand gehalten wird. Der Rastmechanismus könnte demnach eine automatische Verriegelung durchführen. Das mindestens eine Verriegelungselement würde eine selektive lösbare und aktivierbare Verriegelung ausführen können.

Die Erfindung betrifft ferner ein System zum Transport und zur Handhabung von Speisen, aufweisend mindestens ein Ofengestell gemäß der vorhergehenden Beschreibung und mindestens einen Servierwagen, der dazu ausgebildet ist, das mindestens eine Ofengestell in einem Innenraum des Servierwagens aufzunehmen. Der Servierwagen könnte einem Half-Size-Trolley oder einem Full-Size-Trolley entsprechen. Der Servierwagen weist eine Oberseite auf, die das Aufnehmen eines Ofengestells erlauben würde. Der Innenraum des Servierwagens ist so ausgestaltet, dass das Ofengestell direkt von diesem aufgenommen werden könnte. Das Ofengestell könnte dabei an eine Ausstattung eines Standard-Servierwagens angepasst sein, sodass jeder Servierwagen mit einem erfindungsgemäßen Ofengestell bestückbar ist.

Eine Oberseite des Servierwagens könnte eine Aufnahmeeinrichtung zum lösbaren Befestigen des Ofengestells aufweisen, sodass das Ofengestell direkt aus dem Bordküchenofen auf den Servierwagen stellbar und befestigbar ist. Die Handhabung von Speisenbehältern, die bereits erwärmt wurden, wird hierdurch verbessert, da durch die Aufnahmeeinrichtung eine sichere Lagerung des Ofengestellt erreicht wird.

Die Aufnahmeeinrichtung ist an einer Vorderseite des Servierwagens angeordnet, sodass die oben genannte Schublade nach außen über die Vorderkante herausziehbar ist. Ein Tablett könnte beispielsweise halb in dem betreffenden Servierwagen eingeschoben sein und folglich aus diesem herausragen. Durch die Verwendung der Schublade kann ein Speisenbehälter direkt auf ein darunter befindliches Tablett abgegeben werden.

Die Erfindung betrifft ferner ein Flugzeug, aufweisend einen Rumpf, eine darin ausgebildete Kabine und mindestens ein System nach der vorhergehenden Beschreibung.

Die Erfindung betrifft weiterhin ein Verfahren zum Transport und zum Handhaben von Speisen in einer Kabine eines Flugzeugs, aufweisend die Schritte des Entnehmens eines Ofengestells aus einem Servierwagen, der mit Speisenbehältern bestückte, übereinander angeordnete Aufnahmen aufweist, die einen ersten Abstand zueinander einnehmen, des Aufstellens des Ofengestells auf eine Aufstandsfläche, des vertikalen Expandierens des Ofengestells durch Ziehen des Haltegriffs, sodass die Aufnahmen einen zweiten Abstand zueinander einnehmen, der den ersten Abstand überschreitet, des Einbringens des Ofengestells in einen Bordküchenofen, des Entnehmens des Ofengestells und des Ausgebens der Speisenbehälter aus dem Ofengestell.

Das Verfahren weist ferner ein Kompaktieren des Ofengestells zum Einnehmen des ersten Abstandes nach dem Entnehmen des Ofengestells aus dem Bordküchenofen und vor dem Ausgeben der Speisenbehälter durch Drücken auf die Oberseite des Ofengestells auf.

### KURZE BESCHREIBUNG DER FIGUREN

Weitere Merkmale, Vorteile und Anwendungsmöglichkeiten der vorliegenden Erfindung ergeben sich aus der nachfolgenden Beschreibung der Ausführungsbeispiele und den Figuren. Dabei bilden alle beschriebenen und/oder bildlich dargestellten Merkmale für sich und in beliebiger Kombination den Gegenstand der Erfindung auch unabhängig von ihrer Zusammensetzung in den einzelnen Ansprüchen oder deren Rückbezügen. In den Figuren stehen weiterhin gleiche Bezugszeichen für gleiche oder ähnliche Objekte.
Fig. 1 bis 5 zeigen ein Ofengestell in unterschiedlichen Darstellungen.
Fig. 6a und 6b zeigen ein Ofengestell auf einem Servierwagen.
Fig. 7 zeigt das Ofengestell aus den Fig. 1 bis 5 auf dem Servierwagen.
Fig. 8 zeigt ein Flugzeug.

### DETAILLIERTE DARSTELLUNG EXEMPLARISCHER AUSFÜHRUNGSFORMEN

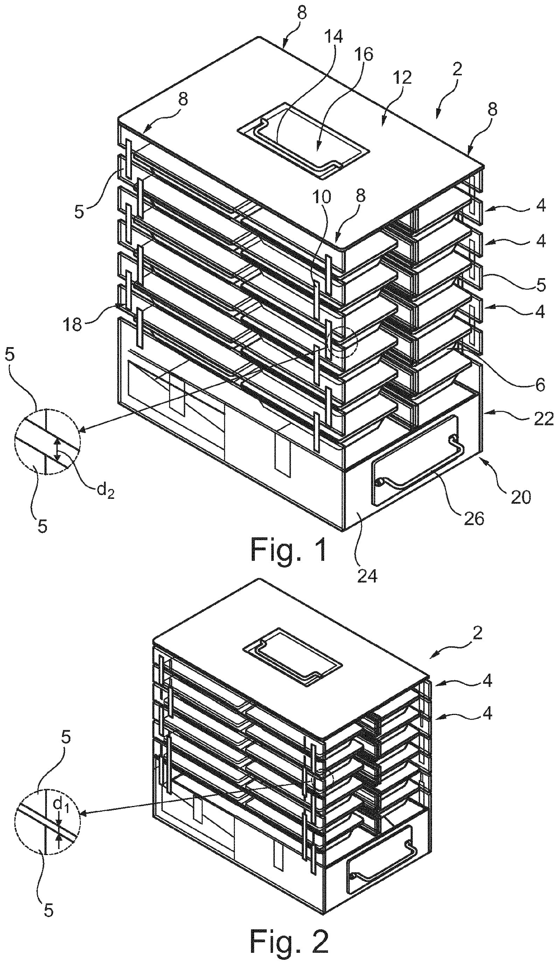

Fig. 1 zeigt ein Ofengestell 2 in einer dreidimensionalen Darstellung. Hier sind mehrere Aufnahmen 4 gezeigt, die übereinander in einer gestapelten Anordnung positioniert sind. Jede der Aufnahmen 4 ist beispielhaft dazu vorgesehen, vier Speisenbehälter 6 in einer Ebene aufzunehmen. Die Speisenbehälter 6 sind beispielsweise paarweise nebeneinander angeordnet und zwei Paare befinden sich hintereinander auf jeder Aufnahme 4. Die Aufnahmen 4 könnten dafür als eine Art Gitter oder Rost mit einer im Wesentlichen flächigen Erstreckung ausgeführt sein. Zum Befestigen der einzelnen Aufnahmen 4 könnten diese an Seitenflächen 5 mit aufrecht stehenden, streifenförmigen Blechen, Stegen oder anderen Einrichtungen ausgestattet sein.

Zwischen den einzelnen Aufnahmen 4 sind Verbindungsanordnungen 8 vorgesehen, die jeweils mehrere Verbinder 10 umfassen. Die einzelnen Verbinder 10 erstrecken sich jeweils zwischen zwei aufeinanderfolgenden Aufnahmen 4 und dienen dazu, die Aufnahmen 4 selektiv mit einem ersten Abstand d₁ (siehe Fig. 2) oder einen zweiten Abstand d₂ (wie in Fig. 1 gezeigt) zueinander anzuordnen. Der zweite Abstand d₂ überschreitet dabei den ersten Abstand d₁ und führt zu einem expandierten Zustand des Ofengestells 2. Der erste Abstand d₁ ist ein geringerer Abstand, der zu einer kompaktierten Form des Ofengestells 2 führt. In dem kompaktierten Zustand kann das Ofengestell 2 in einem Servierwagen (hier nicht gezeigt) bestückt mit Speisenbehältern 6 eingesetzt werden. Das Ofengestell 2 kann aus dem Servierwagen wieder herausgenommen werden, um anschließend expandiert zu werden. In dem expandierten Zustand kann das Ofengestell 2 in einen Bordküchenofen eingeschoben werden und erlaubt eine ausreichende Umspülung der Speisenbehälter 6 mit Heißluft.

Zum Kompaktieren oder Expandieren des Ofengestells 2 weist eine Oberseite 12 einen klappbaren Haltegriff 14 auf. Dieser liegt beispielhaft in einer heruntergeklappten Position in einer Art Mulde 16 und kann von einem Benutzer gegriffen werden. Durch ein Hochziehen des Haltegriffs 14 kann das Ofengestell 2 expandiert und von einem Benutzer gehalten werden. Durch Drücken der Oberseite 16 nach unten kann das Ofengestell 2 kompaktiert werden. Hierzu weisen die Verbindungsanordnungen 8 auch Verriegelungselemente 18 auf, die hier lediglich mit einem Pfeil angedeutet werden. Diese Verriegelungselemente 18 können manuell oder automatisch durch Drücken bzw. Ziehen der Oberseite 12 bzw. des Haltegriffs 14 gelöst oder aktiviert werden. In Fig. 1 befindet sich das Ofengestell 2 in einer expandierten Zustand.

An einer Unterseite 20 des Ofengestells 2 ist eine Ausgabevorrichtung 22 vorgesehen, welche beispielhaft eine Schublade 24 mit einem stirnseitigen, klappbaren Griff 26 umfasst. Die Schublade 24 ist aus dem Ofengestell 2 herausziehbar und wieder einschiebbar. Bei der Schubbewegung können Speisenbehälter 6 aus dem Ofengestell 2 herausgezogen werden. Dies wird weiter nachfolgend dargestellt.

Fig. 2 zeigt das Ofengestell 2 in einer kompaktierten Zustand. Hier sind die einzelnen Aufnahmen 4 in dem ersten Abstand d₁ zueinander angeordnet. In diesem Zustand lässt sich das Ofengestell 2 in einen Servierwagen einsetzen.

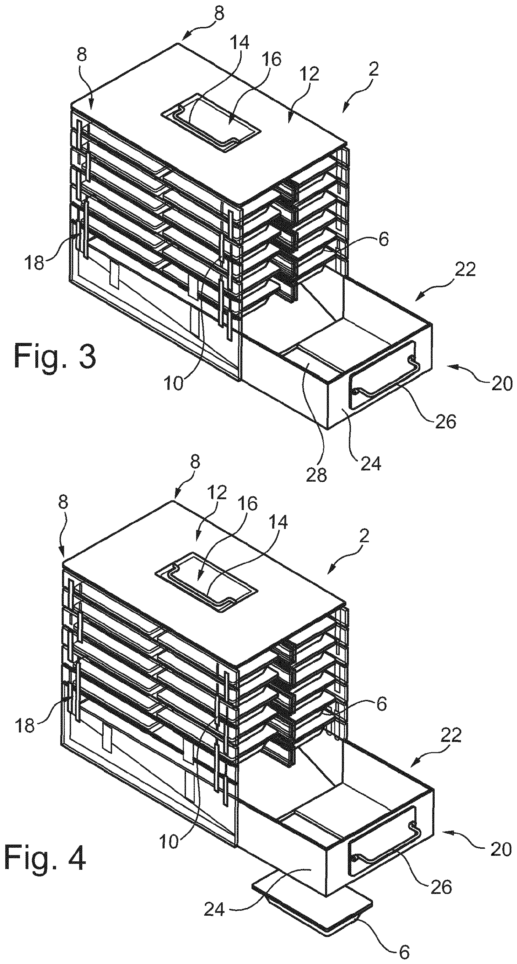

Fig. 3 zeigt die Schublade 24 in einem ausgezogenen Zustand. Ein Benutzer hat den Griff 26 gezogen, um die Schublade herauszuziehen. Hierbei ist anzumerken, dass sich bei der Ausgabe der Speisenbehälter 6 das Ofengestell 2 in dem kompaktierten Zustand befindet. Die Schublade 24 weist eine bodenseitige Öffnung 28 auf, durch die die Speisenbehälter 6 heraus fallen können.

Dies ist in Fig. 4 dargestellt. Hier ist ein einzelner Speisenbehälter 6 im Begriff, aus der bodenseitigen Öffnung 298 herauszufallen. Ein darunter befindliches Tablett kann den Speisenbehälter 6 aufnehmen.

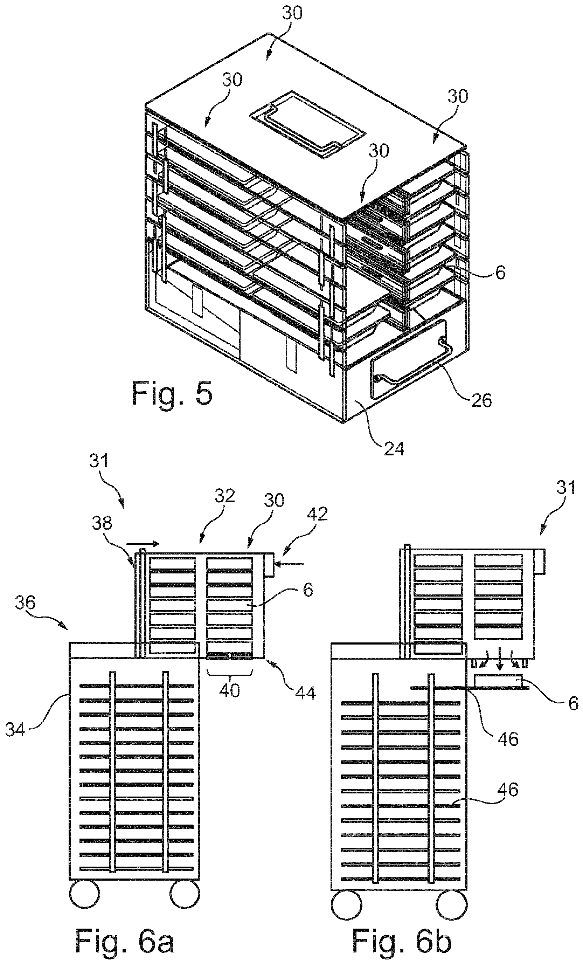

In Fig. 5 sind bereits mehrere Speisenbehälter 6 abgegeben. Ein in dem Ofengestell 2 befindlicher Stapel 30 an Speisenbehältern 6 kann sukzessive durch ein Bewegen der Schublade 24 abgegeben werden. Es könnte möglich sein, durch einen mechanischen Schalter (hier nicht gezeigt) den jeweiligen Stapel 30 zu wählen, der durch die Schublade 24 abzugeben ist.

In den Fig. 6a und 6b wird ein Ofengestell 32 dargestellt, welches auf einem Servierwagen 34 angeordnet ist. Der Servierwagen 34 weist eine Oberseite 36 auf, auf der eine Aufnahmeeinrichtung 38 vorgesehen ist, an der das Ofengestell 32 befestigbar ist. Hier ist das Ofengestell 32 so angeordnet, dass eine vordere Hälfte 40 über den Servierwagen 34 nach außen ragt. Ein Stapel 30 an Speisenbehältern 6 befindet sich folglich außerhalb des Servierwagens. Eine Ausgabevorrichtung 42 ist vorgesehen, selektiv Speisenbehälter 6 durch einen Ausgabemechanismus 44 nach unten freizugeben. Ein Speisenbehälter 6 kann dann auf ein teilweise aus dem Servierwagen 34 herausgezogenes Tablett 46 fallen.

Mehrere solcher Tabletts 46 könnten in dem Servierwagen 34 angeordnet sein und nacheinander mit Speisenbehälter 6 bestückt werden. Die Tabletts 46 könnten entweder manuell direkt unterhalb des Ofengestells 32 platziert werden, oder automatisch nach dem Bestücken eines oberen und insbesondere obersten Tabletts 46 nach oben nachrücken. Die Anordnung aus Fig. 6a und 6b bildet ein System 31 zum Transport und zur Handhabung von Speisen aus.

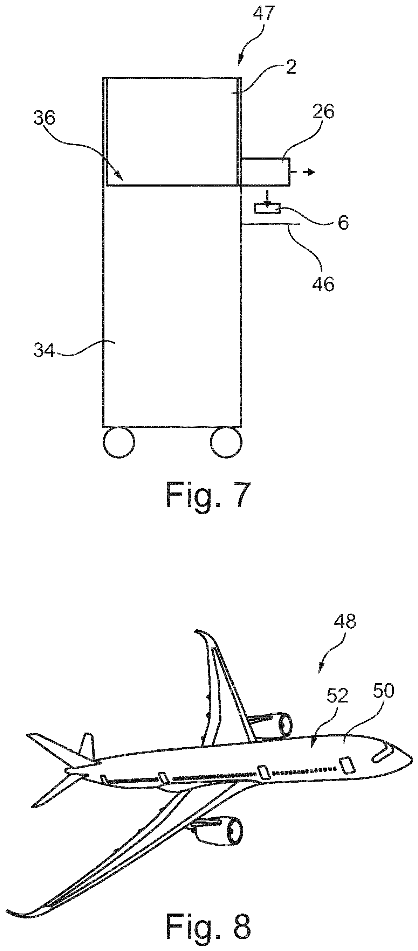

Fig. 7 zeigt den Servierwagen 34 mit einem darauf angeordneten Ofengestell 2 aus den Fig. 1 bis 5. Hier befindet sich das Ofengestell 2 bündig auf der Oberseite 36 des Servierwagens 34 und lediglich die Schublade 26 ragt über die Konturen des Servierwagens 34 hinaus, wenn die Speisenbehälter 6 abgegeben werden. Dies bildet ein weiteres System 47 zum Transport und zur Handhabung von Speisen aus.

Schließlich zeigt Fig. 8 ein Flugzeug 48 mit einem Rumpf 50, einer darin ausgebildeten Kabine 52 und einem System 31 oder 47.

Ergänzend sei darauf hingewiesen, dass "aufweisend" keine anderen Elemente oder Schritte ausschließt, und "ein" oder "eine" keine Vielzahl ausschließt. Ferner sei darauf hingewiesen, dass Merkmale, die mit Verweis auf eines der obigen Ausführungsbeispiele beschrieben worden sind, auch in Kombination mit anderen Merkmalen anderer oben beschriebener Ausführungsbeispiele verwendet werden können, gemäss den Merkmalen der beigefügten Ansprüche.

Bezugszeichen in den Ansprüchen sind nicht als Einschränkung anzusehen.

### BEZUGSZEICHEN

- 2: Ofengestell
- 4: Aufnahme
- 5: Seitenfläche
- 6: Speisenbehälter
- 8: Verbindungsanordnung
- 10: Verbinder
- 12: Oberseite
- 14: Haltegriff
- 16: Mulde
- 18: Verriegelungselement
- 20: Unterseite
- 22: Ausgabevorrichtung
- 24: Schublade
- 26: Griff
- 28: Öffnung
- 30: Stapel
- 31: System
- 32: Ofengestell
- 34: Servierwagen
- 36: Oberseite des Servierwagens
- 38: Aufnahmeeinrichtung
- 40: vordere Hälfte
- 42: Ausgabevorrichtung
- 44: Ausgabemechanismus
- 46: Tablett
- 47: System
- 48: Flugzeug
- 50: Rumpf
- 52: Kabine

- d₁: erster Abstand
- d₂: zweiter Abstand

## Patentansprüche

1. Ofengestell (2, 32) zum Halten von Speisenbehältern (6) zum Erhitzen in einem Bordküchenofen, aufweisend:
- mehrere Aufnahmen (4) zum Aufnehmen von Speisenbehältern (6),
- mindestens zwei Verbindungsanordnungen (8),
wobei die Aufnahmen (4) übereinander angeordnet sind,
wobei die mindestens zwei Verbindungsanordnungen (8) an zwei einander gegenüberliegenden Seitenflächen (5) der Aufnahmen (4) angeordnet und mit den Aufnahmen (4) gekoppelt sind,
wobei die Verbindungsanordnungen (8) dazu ausgebildet sind, die Aufnahmen (4) übereinander zu halten und wahlweise zum Einnehmen eines kompaktierten Zustandes mit einem ersten Abstand d₁ zueinander zu arretieren oder zum Einnehmen eines Entnahmezustandes zur Entnahme der Speisenbehälter (6) mit einem zweiten Abstand d₂ zueinander zu arretieren, wobei der zweite Abstand d₂ größer ist als der erste Abstand d₁,
wobei das Ofengestell (2, 32) an einer Oberseite (12) einen Haltegriff (14) aufweist, an dem das Ofengestell (2, 32) gehalten oder hochgehoben werden kann, und die mindestens zwei Verbindungsanordnungen (8) dazu ausgebildet sind, beim Ziehen des Haltegriffs (14) den zweiten Abstand d₂ einzunehmen, oder.
wobei die mindestens zwei Verbindungsanordnungen (8) dazu ausgebildet sind, durch Drücken auf eine Oberseite (12) des Ofengestells (2, 32) den ersten Abstand d₁ einzunehmen.

2. Ofengestell (2, 32) nach Anspruch 1,
ferner aufweisend eine in das Ofengestell (2, 32) integrierte Ausgabevorrichtung (22, 42), die dazu ausgebildet ist, bei der Bewegung einer Komponente (24) der Ausgabevorrichtung (22, 42) einen Speisenbehälter (6) aus dem Ofengestell (2, 32) nach außen abzugeben.

3. Ofengestell (2, 32) nach Anspruch 2,
wobei die Ausgabevorrichtung (22, 42) eine Schublade (24) zum Herausziehen einzelner Speisenbehälter (6) aufweist, die zwischen einer eingeschobenen Stellung und einer herausgezogenen Stellung bewegbar ist, wobei die Ausgabevorrichtung (22, 42) dazu ausgebildet ist, beim Bewegen der Schublade (24) in die herausgezogene Stellung einen Speisenbehälter (6) auszugeben.

4. Ofengestell (2, 32) nach Anspruch 3,
wobei die Schublade (24) eine bodenseitige Öffnung (28) aufweist, durch die Speisenbehälter (6) ausgegeben werden.

5. Ofengestell (2, 32) nach einem der Ansprüche 2 bis 4,
wobei die Ausgabevorrichtung (22, 42) dazu ausgebildet ist, die Speisenbehälter (6) vertikal zu bewegen, sodass nacheinander übereinander befindliche Speisenbehälter (6) durch die Ausgabevorrichtung (22, 42) ausgegeben werden.

6. Ofengestell (2, 32) nach einem der vorhergehenden Ansprüche,
wobei die mindestens zwei Verbindungsanordnungen (8) mindestens einen Rastmechanismus und/oder mindestens ein Verriegelungselement (18) zum selektiven Arretieren der Aufnahmen (4) in dem ersten oder zweiten Abstand d₂.

7. System (31, 47) zum Transport und zur Handhabung von Speisen, aufweisend mindestens ein Ofengestell (2, 32) nach einem der vorhergehenden Ansprüche und mindestens einen Servierwagen (34), der dazu ausgebildet ist, das mindestens eine Ofengestell (2, 32) in einem Innenraum des Servierwagens (34) aufzunehmen.

8. System nach Anspruch 7,
wobei eine Oberseite (36) des Servierwagens eine Aufnahmeeinrichtung (38) zum lösbaren Befestigen des Ofengestells (2, 32) aufweist, sodass das Ofengestell (2, 32) direkt aus dem Bordküchenofen auf den Servierwagen (34) stellbar und befestigbar ist.

9. System nach Anspruch 8,
wobei die Aufnahmeeinrichtung (38) an einer Vorderseite des Servierwagens (34) angeordnet ist, sodass die Schublade (24) nach Anspruch 3 nach außen über eine Vorderkante des Servierwagens (34) herausziehbar ist.

10. Flugzeug (48), aufweisend einen Rumpf (50), eine darin ausgebildete Kabine (52) und mindestens ein System (31, 47) nach einem der Ansprüche 7 bis 9.

11. Verfahren zum Transport und zum Handhaben von Speisen in einer Kabine eines Flugzeugs, aufweisend die Schritte:
- Entnehmen eines Ofengestells (2, 32) nach einem der Ansprüche 1 bis 9 aus einem Servierwagen, der mit Speisenbehältern (6) bestückte, übereinander angeordnete Aufnahmen aufweist, die einen ersten Abstand d₁ zueinander einnehmen,
- Aufstellen des Ofengestells (2, 32) auf eine Aufstandsfläche,
- Vertikales Expandieren des Ofengestells (2, 32) durch Ziehen des Haltegriffs (14), sodass die Aufnahmen einen zweiten Abstand d₂ zueinander einnehmen, der den ersten Abstand d₁ überschreitet,
- Einbringen des Ofengestells (2, 32) in einen Bordküchenofen,
- Entnehmen des Ofengestells (2, 32),
- Kompaktieren des Ofengestells (2, 32) zum Einnehmen des ersten Abstandes d₁ durch Drücken auf die Oberseite (12) des Ofengestells (2, 32) und
- Ausgeben der Speisenbehälter (6) aus dem Ofengestell (2, 32).

## Claims

1. Oven frame (2, 32) for holding food containers (6) for heating in a galley kitchen oven, having
- a plurality of receptacles (4) for receiving food containers (6);
- at least two connection assemblies (8),
wherein the receptacles (4) are disposed on top of one another;
wherein the at least two connection assemblies (8) are disposed on two mutually opposite lateral faces (5) of the receptacles (4) and are coupled to the receptacles (4) ;
wherein the connection assemblies (8) are designed to keep the receptacles (4) on top of one another and optionally to lock the latter for assuming a compact state with a first mutual spacing d₁, or to lock the latter for assuming a retrieval state for retrieving the food containers (6) with a second mutual spacing d₂, wherein the second spacing d₂ is larger than the first spacing d₁;
wherein the oven frame (2, 32) on an upper side (12) has a handle (14) by which the over frame (2, 32) can be held or lifted, and the at least two connection assemblies (8) are designed to assume the second spacing d₂ when pulling the handle (14);
wherein the at least two connection assemblies (8) are designed to assume the first spacing d₁ by pressing on an upper side (12) of the oven frame (2, 32).

2. Oven frame (2, 32) according to Claim 1,
furthermore having a dispensing device (22, 42) which is integrated into the oven frame (2, 32) and, when moving a component (24) of the dispensing device (22, 42) is designed to deliver a food container (6) from the oven frame (2, 32) to the outside.

3. Oven frame (2, 32) according to Claim 2,
wherein the dispensing device (22, 42) has a drawer (24) for extracting individual food containers (6), said drawer (24) being movable between a retracted position and a extracted position, wherein the dispensing device (22, 42) is designed to dispense a food container (6) when the drawer (24) is moved to the extracted position.

4. Oven frame (2, 32) according to Claim 3,
wherein the drawer (24) has a base-proximal opening (28) through which the food containers (6) are dispensed.

5. Oven frame (2, 32) according to one of Claims 2 to 4,
wherein the dispensing device (22, 42) is designed to move the food containers (6) vertically in such a way that food containers (6) located on top of one another are dispensed successively by the dispensing device (22, 42) .

6. Oven frame (2, 32) according to one of the preceding claims,
wherein the at least two connection assemblies (8) have at least one latching mechanism and/or at least one locking element (18) for optionally locking the receptacles (4) at the first or the second spacing d₂.

7. System (31, 47) for transporting and handling food, having at least one oven frame (2, 32) according to one of the preceding claims, and at least one serving trolley (34) which is designed to receive the at least one oven frame (2, 32) in an interior of the serving trolley (34).

8. System according to Claim 7,
wherein an upper side (36) of the serving trolley has a receptacle installation (38) for releasably fastening the oven frame (2, 32) in such a way that the oven frame (2, 32) is able to be placed on and fastened to the serving trolley (34) directly from the galley kitchen oven.

9. System according to Claim 8,
wherein the receptacle installation (38) is disposed on a front side of the serving trolley (34) in such a way that the drawer (24) according to Claim 3 is able to be extracted outwards beyond a front edge of the serving trolley (34).

10. Aircraft (48) having a fuselage (50), a cabin (52) formed therein, and at least one system (31, 47) according to one of Claims 7 to 9.

11. Method for transporting and handling food in a cabin of an aircraft, comprising the following steps:
- retrieving an oven frame (2, 32) according to one of Claims 1 to 9 from a serving trolley which has receptacles that are disposed on top of one another, are equipped with food containers (6) and assume a first mutual spacing d₁;
- setting up the oven frame (2, 32) on a support surface;
- expanding the oven frame (2, 32) vertically by pulling the handle (14) in such a way that the receptacles assume a second mutual spacing d₂ which exceeds the first mutual spacing d₁;
- introducing the oven frame (2, 32) into a galley kitchen oven;
- retrieving the oven frame (2, 32);
- compacting the oven frame (2, 32) for assuming the first spacing d₁ by pressing on the upper side (12) of the oven frame (2, 32); and
- dispensing the food containers (6) from the oven frame (2, 32).

## Revendications

1. Cadre de four (2, 32) pour maintenir des récipients alimentaires (6) à chauffer dans un four de cuisine de bord, comprenant :
- plusieurs réceptacles (4) pour recevoir des récipients alimentaires (6),
- au moins deux agencements de liaison (8),
les réceptacles (4) étant agencés les uns au-dessus des autres,
les au moins deux agencements de liaison (8) étant agencés sur deux surfaces latérales opposées (5) des réceptacles (4) et étant couplés aux réceptacles (4), les agencements de liaison (8) étant configurés pour maintenir les réceptacles (4) les uns au-dessus des autres et pour les bloquer sélectivement les uns par rapport aux autres à une première distance d₁ pour prendre un état compacté ou à une deuxième distance d₂ pour prendre un état de retrait pour retirer les récipients alimentaires (6), la deuxième distance d₂ étant supérieure à la première distance d₂,
le cadre de four (2, 32) présentant sur un côté supérieur (12) une poignée de maintien (14) par laquelle le cadre de four (2, 32) peut être maintenu ou soulevé, et les au moins deux agencements de liaison (8) étant configurés pour prendre la deuxième distance d₂ en tirant sur la poignée de maintien (14), ou
les au moins deux agencements de liaison (8) étant configurés pour prendre la première distance d₁ en appuyant sur un côté supérieur (12) du cadre de four (2, 32) .

2. Cadre de four (2, 32) selon la revendication 1, présentant en outre un dispositif de distribution (22, 42) intégré dans le cadre de four (2, 32), qui est configuré pour distribuer un récipient alimentaire (6) vers l'extérieur du cadre de four (2, 32) lors du déplacement d'un composant (24) du dispositif de distribution (22, 42).

3. Cadre de four (2, 32) selon la revendication 2,
le dispositif de distribution (22, 42) présentant un tiroir (24) pour extraire des récipients alimentaires individuels (6), qui peut être déplacé entre une position rétractée et une position extraite, le dispositif de distribution (22, 42) étant configuré pour distribuer un récipient alimentaire (6) lors du déplacement du tiroir (24) vers la position extraite.

4. Cadre de four (2, 32) selon la revendication 3,
le tiroir (24) présentant une ouverture (28) du côté du fond à travers laquelle des récipients alimentaires (6) sont distribués.

5. Cadre de four (2, 32) selon l'une quelconque des revendications 2 à 4,
le dispositif de distribution (22, 42) étant configuré pour déplacer les récipients alimentaires (6) verticalement, de telle sorte que des récipients alimentaires (6) se trouvant les uns au-dessus des autres sont distribués successivement par le dispositif de distribution (22, 42).

6. Cadre de four (2, 32) selon l'une quelconque des revendications précédentes,
les au moins deux agencements de liaison (8) comprenant au moins un mécanisme d'encliquetage et/ou au moins un élément de verrouillage (18) pour bloquer sélectivement les réceptacles (4) à la première ou à la deuxième distance d₂.

7. Système (31, 47) pour le transport et la manipulation d'aliments, présentant au moins un cadre de four (2, 32) selon l'une quelconque des revendications précédentes et au moins un chariot de service (34) configuré pour recevoir l'au moins un cadre de four (2, 32) dans un espace intérieur du chariot de service (34).

8. Système selon la revendication 7,
un côté supérieur (36) du chariot de service présentant un appareil de réception (38) pour fixer de manière amovible le cadre de four (2, 32), de telle sorte que le cadre de four (2, 32) peut être placé et fixé directement à partir du four de cuisine de bord sur le chariot de service (34).

9. Système selon la revendication 8,
l'appareil de réception (38) étant agencé sur un côté avant du chariot de service (34), de telle sorte que le tiroir (24) selon la revendication 3 peut être extrait vers l'extérieur au-delà d'un bord avant du chariot de service (34).

10. Aéronef (48), présentant un fuselage (50), une cabine (52) configurée dans celui-ci et au moins un système (31, 47) selon l'une quelconque des revendications 7 à 9.

11. Procédé de transport et de manipulation d'aliments dans une cabine d'aéronef, présentant les étapes suivantes :
- le retrait d'un cadre de four (2, 32) selon l'une quelconque des revendications 1 à 9 d'un chariot de service qui présente des réceptacles équipés de récipients alimentaires (6), agencés les uns au-dessus des autres, qui prennent une première distance d₁ les uns par rapport aux autres,
- la mise en place du cadre du four (2, 32) sur une surface d'appui,
- l'expansion verticale du cadre de four (2, 32) en tirant la poignée de maintien (14) de telle sorte que les réceptacles prennent une deuxième distance d₂ les uns par rapport aux autres, qui dépasse la première distance d₁,
- l'introduction du cadre de four (2, 32) dans un four de cuisine de bord,
- le retrait du cadre de four (2, 32),
- le compactage du cadre de four (2, 32) pour prendre la première distance d₁ en appuyant sur le côté supérieur (12) du cadre de four (2, 32), et
- la distribution des récipients alimentaires (6) du cadre de four (2, 32).
